# EUROPEAN PATENT SPECIFICATION

(11) **EP 3 462 097 B1**
(45) Date of publication and mention of the grant of the patent: **03.06.2020**
(21) Application number: 17201227.0
(22) Date of filing: 12.11.2017
(51) Int. Cl.: F24F 1/02, F24F 3/16, F24F 6/00

(54) **ENVIRONMENTAL CONTROL UNIT**
UMGEBUNGSSTEUEREINHEIT
UNITÉ DE CONTRÔLE ENVIRONNEMENTAL

(30) Priority: 27.09.2017 CN 201710888657
(43) Date of publication of application: 03.04.2019
(73) Proprietor: Shandong Rongan Electronic Science and Technology Co., Ltd., Qingdao Shandong (CN)
(72) Inventor: Liu, Jialou, Qingdao, Shandong (CN)
(74) Representative: Spittle, Mark Charles

(56) References cited:
- EP-A1- 3 163 185
- WO-A1-2012/166131
- CN-A- 103 673 132
- CN-U- 205 316 503
- US-A1- 2015 241 072

## Description

The present invention relates to the air environmental control technical field, especially relates to an environmental control unit.

Most of the traditional indoor heating system adopts the heating radiator which has the disadvantage of huge heat loss in the heating process, immovability according its fixing way and inconvenience of cleaning and replacement. Except using heating radiator, the current heating supply method also includes the use of air conditioner, which has the disadvantage of dry skin and human body discomfort caused by the long-term use of air conditioner, and high energy consumption which is not environmentally friendly. With the development of the society, people have higher and higher requirements for the indoor environment quality, so it is difficult to meet the demand of air purification by using the traditional air conditioner for heating. In order to improve the indoor air quality, the most common method is to use indoor air purifiers, however, fast refreshing and purification of the air cannot be achieved because of using air purifier as it does not speed up the circulation efficiency because the air purifier does not make the use of air convection, which hugely affects the effect of the air purifier.

US2015241072 discloses an energy-saving, four-season, smart, and safe cold/hot air blower of the present invention relates to a technique, which enables cold-air humidification by removing moisture when being used in the summer, can supply instantaneous hot air when the room temperature temporarily goes down, enables hot-air humidification by supplying moisture when being used in the winter, and further enables a four-season use by using an additional humidification function in the spring and fall seasons and enables the control of room temperature and room humidity by providing an indoor temperature/humidity sensor and a water temperature sensor, saves energy by intelligently operating and stopping all the functions thereof and operating a function for continuously connecting the operations, can improve the convenience of use by providing warning signs through lamps for indicating supply or discharge or lack of water according to the attachment of a high/low water level gauge of a water tank and a high water level gauge of a water tank for dehumidification, prevents safety accidents such as damage or conflagration and the like of components related to a fan driving motor by providing a fan driving motor overheating prevention sensor as a thermostat sensor at one side of the inner surface of the fan driving motor, and particularly, fundamentally prevents the leakage of water to the outside when a main body is falls down due to the negligence of a user.

Considering the wording of claim 1, US2015241072 discloses an environmental control unit comprising a shell, a cooling device, a water pipe, a heating device, a controlling device, a sensor device, a safety protection device, an air purification device and a humidifying device; Said cooling device is fixed on the inside wall of the shell, said heating device is fixed on the bottom wall of the shell, and said heating device is connected with the cooling device by the water pipe; Said controlling device comprises a controller and a display device, said controller is set on the top of the heating device and fixed on the inside wall of the shell opposite to the cooling device, said display device is set on the top wall of the outer shell; Said sensor device comprises a temperature sensor and a humidity sensor which are all set on the outside wall of the shell and connected to the controlling device, and further comprises a monitoring sensor set on inside wall of the shell; Said safety protection device comprises a water level switch unit set in the heating device; and said heating device and said humidifying device are electrically connected with the controlling device.

In order to solve the deficiency of the prior technology, the present invention provides an environmental control unit.

The technical scheme of this invention is:
An environmental control unit, comprising a shell, a cooling device, a water pipe, a heating device, a controlling device, a sensor device, a safety protection device, an air purification device and a humidifying device; Said shell comprises an inner shell and an outer shell, an air duct is formed between said outer shell and said inner shell; Said cooling device is fixed on the inside wall of the inner shell, said heating device is fixed on the bottom wall of the inner shell, said heating device is connected with the cooling device by the water pipe; Said controlling device comprises a controller and a display device, said controller is set at the top of the heating device and fixed on the inside wall of the inner shell opposite to the cooling device, said display device is set on the top wall of the outer shell; said sensor device comprises a temperature sensor, a humidity sensor and a PM sensor which are all set on the outside wall of the outer shell and connected to the controlling device, and further comprises a monitoring sensor set on the inside wall of the inner shell; said safety protection device comprises a lightning protection device set on the bottom of the inner shell, an anti-tipping device set on inside wall of the inner shell at the same side with the controller, a water level switch unit set in the heating device and an anti-creeping device set on the bottom of the inner shell; said air purification device is set on the top of the controller; said humidifying device is set in the air purification device and fixed on the top wall of the inner shell; said heating device, said air purification device and said humidifying device are electrically connected with the controlling device.

Furthermore, said cooling device comprises a copper radiating pipe fin and a cooling fan, said cooling fan is assembled at the place which is on one side of the copper radiating pipe fin and near to the water pipe.

Furthermore, said heating device comprises a water tank, a water circulation mechanism, and a heating mechanism, said water circulation mechanism and said heating mechanism are set in the water tank, said water tank is the water-oil integrated water tank, said water circulation mechanism is set as the high temperature resistant circulating pump.

Furthermore, an air inlet a and an air inlet b are provided on the outside wall of said shell from top to bottom.

Furthermore, said air purification device comprises an air inlet a, an air outlet, a fan and a composite filter screen; said air inlet a is set on the side wall of the shell, said air outlet is set on the top wall of the shell in the shape as ladder structure, said composite filter screen is set at the rear of said air inlet a and connected with the air duct, said fan is set at the rear of said composite filter screen, said humidifying device comprises a humidifying part and a mist outlet, said mist outlet runs through the top wall of the shell and is connected with the air outside the shell.

Beneficial effects of the present invention are:
The present invention combines the efficient circulation heating supply system with the air purification device, which rapidly heats air whilst accelerates the air circulation, purification, and humidification treatment process by the use of cold-hot air convection. The sensor provided in this present invention can carry out the real-time detection of indoor air quality and the temperature, humidity and air quality can be adjusted by the controlling system further according to the environmental parameters. The present invention has many advantages such as environmental protection and comfortable, safe and health, no hot or cold pole, no heat radiation, movable, intelligent operation, etc. The present invention effectively improves the air purification and humidification efficiency by the use of air convection circulation, with very high practical value, and it has important positive significance for the development of water heating industry field.

An embodiment of the present invention will now be described by way of example only and with reference to the accompanying drawings, in which:
Figure 1 is a schematic view of the internal structure of the present invention;
Figure 2 is a schematic view of the external structure of the present invention; and
Figure 3 is schematic view of the air flow in the using process of the present invention, in which,
   1. Air duct; 2. Cooling device; 3. Water pipe; 4. Heating device; 41. Water level switch unit; 5. Air purification device; 51. Air inlet a; 52. Composite filter screen; 53. Wind turbine; 54. Air outlet; 6. Humidifying device; 61. Mist outlet; 71. Controller; 72. Display device; 8. Air inlet b; 91. Monitoring sensor; 92. Anti-tipping device; 93. Lightning protection device; 94. Anti-creeping device.

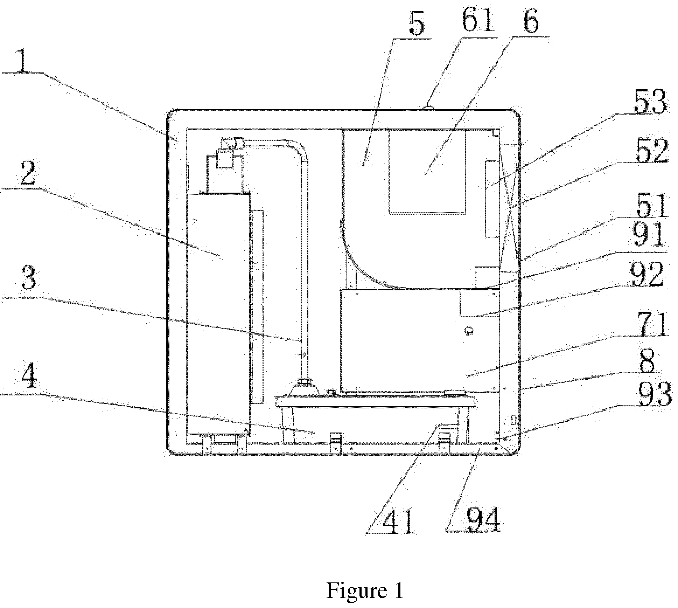

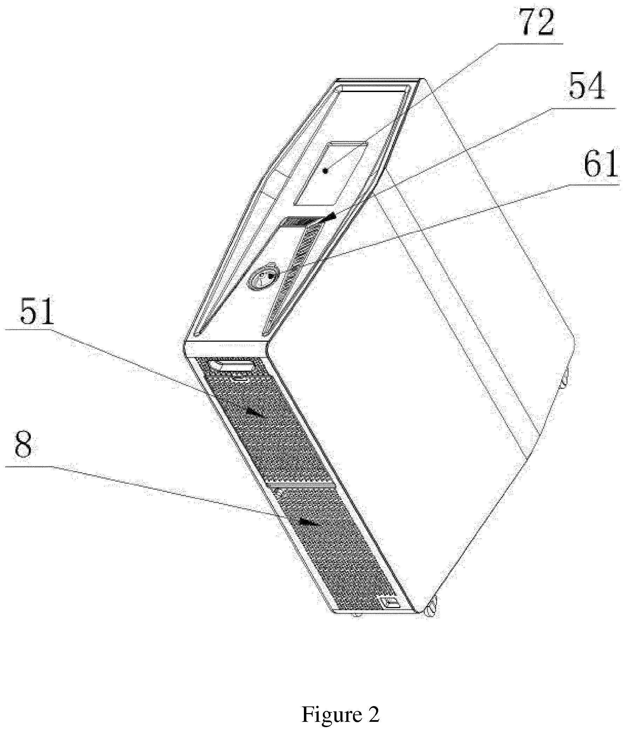

Referring to Fig.1 and Fig.2, there is shown an environmental control unit, comprises a shell and a cooling device 2, a water pipe 3, a heating device 4, a controlling device, a sensor device, an air purification device 5 and a humidifying device 6 which are set in the shell. The shell comprises an inner shell and an outer shell, said inside wall of outer shell and said outside wall of inner shell form the air duct 1; The cooling device 2 is fixed on the inside wall of the inner shell, the heating device 4 is fixed on the bottom wall of the inner shell, and the heating device 4 is connected with the cooling device 2 by the water pipe 3; The water pipe 3 is in the shape as "7", with its one end being connected to the upper end of the cooling device 2 and its other end being connected to the heating device 4. The controlling device comprises a controller 71 and a display device 72. The controller 71 is set on the top of the heating device4 and fixed on the inside wall of the inner shell opposite to the cooling device 2, and the display device 72 is set on the top wall of the outer shell; The sensor device comprises a temperature sensor, a humidity sensor and a PM sensor which are all set on the outside wall of the outer shell and are connected to the controlling device, the sensor device further comprises a monitoring sensor 91 set on inside wall of the inner shell; The safety protection device comprises a lightning protection device 93, an anti-tipping device 92, a water level switch unit 41 and an anti-creeping device 94,the lightning protection device 93 is set on the bottom of the side wall of the inner shell, the anti-tipping device 92 is set on the inside wall of the inner shell at the same side with the controller 71, the water level switch unit 41 is set in the heating device 4, and the anti-creeping device 94 is set on the bottom of the shell. The air purification device 5 is set on the top of the controller 71, with its one end being fixed on the inside wall of the inner shell and its other end being fixed on the top wall of the inner shell. The humidifying device 4 is set in the air purification device 5 and is fixed on the top wall of the inner shell; The heating device 4, the air purification device 5 and the humidifying device 6 carry out the electrical connection with the control device.

The cooling device 2 comprises a copper radiating pipe fin and a cooling fan. The cooling fan is mounted at the place which is on one side of the copper radiating pipe fin and near to the water pipe, and the cooling fan can be arranged as silent fan. The heating device 4 comprises a water-oil integrated water tank, a high temperature resistant circulating pump and a heating mechanism. The water circulating pump and heating mechanism are set in the water tank. The outside wall of the shell is provided with an air inlet a 51 and an air inlet b 8 from top of the outside wall to the bottom of the outside wall, the air inlet a 51 is set as the air inlet of the air purification device, and the air inlet b 8 is set as the air inlet of the cold air. The air purification device comprises an air inlet a 51, an air outlet 54, a fan 53 and a composite filter screen 52. The air inlet a 51 is set on the side wall of the shell, the air outlet 54 is set on the top wall of the shell in the shape of ladder structure, the composite filter screen 52 is set at the rear of the air inlet a 51 and is connected with the air duct 1, and the fan 53 is set at the rear of the composite filter screen 52. The humidifying device 6 comprises a humidifying part and a mist outlet 61. The mist outlet 61 runs through the top wall of the shell and is connected with the air outside the shell.

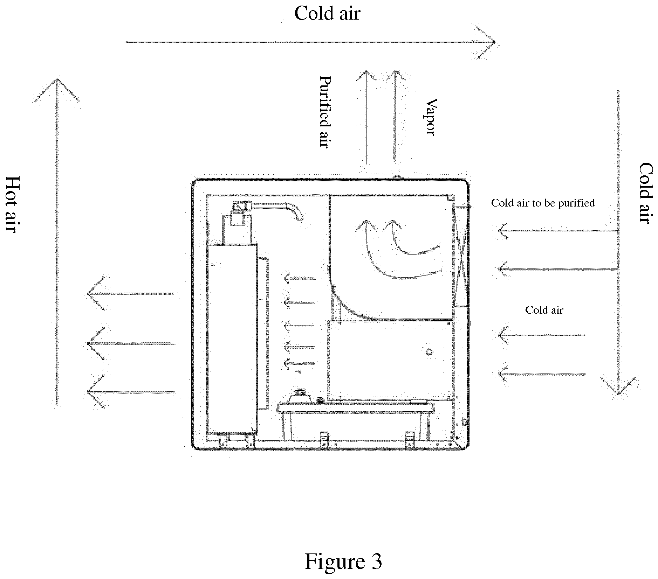

Referring to Fig. 3, in the specific using process: the heated water I enters into the cooling device through the water pipe under the action of the water circulation mechanism, and the rotation of the cooling fan accelerates the air convection, thus greatly improves the cooling effect of the cooling device. Such tower structure can collect the rising hot air heated in the lower part very well, thus improve the processing efficiency.

The above implementation mode of the invention doesn't constitute the limit to the scope of protection of the invention. Any modification, equivalent replacement and improvement made within the spirit and principle of the invention shall be included in the scope of protection of the claims of the present invention.

## Claims

1. An environmental control unit comprising a shell, a cooling device (2), a water pipe (3), a heating device (4), a controlling device, a sensor device, a safety protection device, an air purification device (5) and a humidifying device (6); Said shell comprises an inner shell and an outer shell, an air duct (1) is formed between said outer shell and said inner shell ; Said cooling device (2) is fixed on the inside wall of the inner shell, said heating device (4) is fixed on the bottom wall of the inner shell, and said heating device (4) is connected with the cooling device (2) by the water pipe (3); Said controlling device comprises a controller (71) and a display device (72), said controller (71) is set on the top of the heating device (4) and fixed on the inside wall of the inner shell opposite to the cooling device (2), said display device (72) is set on the top wall of the outer shell; Said sensor device comprises a temperature sensor, a humidity sensor and a PM sensor which are all set on the outside wall of the outer shell and connected to the controlling device, and further comprises a monitoring sensor (91) set on inside wall of the inner shell; Said safety protection device comprises a lightning protection device (93) set on the bottom of the inner shell, an anti-tipping device (92) set on inside wall of the inner shell at the same side with the controller (71), a water level switch unit (41) set in the heating device (4) and an anti-creeping device (94) set on the bottom of the inner shell; Said air purification device (5) is set on the top of the controller (71); Said humidifying device (6) is set in the air purification device (5) and fixed on the top wall of the inner shell; Said heating device (4), said air purification device (5) and said humidifying device (6) are electrically connected with the controlling device.

2. An environmental control unit as claimed in claim 1, **characterised in that** said cooling device (2) comprises a copper radiating pipe fin and a cooling fan, a said cooling fan is assembled at the place which is on one side of the copper radiating pipe fin and near to the water pipe (3).

3. An environmental control unit as claimed in claim 1, **characterised in that** said heating device (4) comprises a water tank, a water circulation mechanism, and a heating mechanism, said water circulation mechanism and said heating mechanism are set in the water tank, said water tank is the water-oil integrated water tank, said water circulation mechanism is set as the high temperature resistant circulating pump.

4. An environmental control unit as claimed in claim 1, **characterised in that** an air inlet (51) a and an air inlet (51) b are provided on the outside wall of said shell from top to bottom.

5. An environmental control unit as claimed in anyone of claim 1-4, **characterised in that** said air purification device (5) comprises an air inlet (51) a, an air outlet (54), a fan and a composite filter screen (52); said air inlet (51) a is set on the side wall of the shell, said air outlet (54) is set on the top wall of the shell in the shape as ladder structure, said composite filter screen (52) is set at the rear of said air inlet (51) a and connected with the air duct (1), said fan is set at the rear of said composite filter screen (52), said humidifying device (6) comprises a humidifying part and a mist outlet (61), said mist outlet (61) runs through the top wall of the shell and is connected with the air outside the shell.

## Patentansprüche

1. Umgebungssteuereinheit, umfassend eine Hülle, eine Kühlvorrichtung (2), ein Wasserrohr (3), eine Heizvorrichtung (4), eine Steuervorrichtung, eine Sensorvorrichtung, eine Sicherheitsschutzvorrichtung, eine Luftreinigungsvorrichtung (5) und eine Befeuchtungsvorrichtung (6);
Wobei die Hülle eine Innenhülle und eine Außenhülle umfasst, wobei ein Luftkanal (1) zwischen der Außenhülle und der Innenhülle ausgebildet ist;
Wobei die Kühlvorrichtung (2) an der inneren Wand der Innenhülle befestigt ist, die Heizvorrichtung (4) an der unteren Wand der Innenhülle befestigt ist, und die Heizvorrichtung (4) mit der Kühlvorrichtung (2) durch das Wasserrohr (3) verbunden ist;
Wobei die Steuervorrichtung eine Steuerung (71) und eine Anzeigevorrichtung (72) umfasst, wobei die Steuerung (71) oberhalb der Heizvorrichtung (4) angebracht ist und an der inneren Wand der Innenhülle gegenüber der Kühlvorrichtung (2) befestigt ist, wobei die Anzeigevorrichtung (72) an der oberen Wand der Außenhülle angebracht ist;
Wobei die Sensorvorrichtung einen Temperatursensor, einen Feuchtigkeitssensor und einen PM-Sensor umfasst, die alle an der äußeren Wand der Außenhülle angebracht und mit der Steuervorrichtung verbunden sind, und ferner einen Überwachungssensor (91) umfasst, der an der inneren Wand der Innenhülle angebracht ist;
Wobei die Sicherheitsschutzvorrichtung eine Blitzschutzvorrichtung (93), die unten an der Innenhülle angebracht ist, eine Kippschutzvorrichtung (92), die an der inneren Wand der Innenhülle auf derselben Seite wie die Steuerung (71) angebracht ist, eine Wasserfüllstandgrenzschaltereinheit (41), die in die Heizvorrichtung (4) eingesetzt ist, und eine Kriechschutzvorrichtung (94) umfasst, die unterhalb der Innenhülle angebracht ist;
Wobei die Luftreinigungsvorrichtung (5) oben auf der Steuerung (71) angebracht ist;
Wobei die Befeuchtungsvorrichtung (6) in die Luftreinigungsvorrichtung (5) eingesetzt und an der oberen Wand der Innenhülle befestigt ist;
Wobei die Heizvorrichtung (4), die Luftreinigungsvorrichtung (5) und die Befeuchtungsvorrichtung (6) elektrisch mit der Steuervorrichtung verbunden sind.

2. Umgebungssteuereinheit nach Anspruch 1, **dadurch gekennzeichnet, dass** die Kühlvorrichtung (2) eine Kupferstrahlrohrlamelle und ein Kühlgebläse umfasst, wobei ein Kühlgebläse an der Stelle, die auf einer Seite der Kupferstrahlrohrlamelle und in der Nähe des Wasserrohrs (3) ist, angeordnet ist.

3. Umgebungssteuereinheit nach Anspruch 1, **dadurch gekennzeichnet, dass** die Heizvorrichtung (4) ein Wasserbecken, einen Wasserzirkulationsmechanismus, und einen Heizmechanismus umfasst, wobei der Wasserzirkulationsmechanismus und der Heizmechanismus in dem Wasser eingesetzt sind, wobei das Wasserbecken ein Wasser-Öl-integriertes Wasserbecken ist, wobei der Wasserzirkulationsmechanismus als hochtemperaturbeständige Umlaufpumpe eingestellt ist.

4. Umgebungssteuereinheit nach Anspruch 1, **dadurch gekennzeichnet, dass** ein Lufteinlass (51) a und ein Lufteinlass (51) b an der äußeren Wand der Hülle von oben nach unten bereitgestellt sind.

5. Umgebungssteuereinheit nach einem der Ansprüche 1-4, **dadurch gekennzeichnet, dass** die Luftreinigungsvorrichtung (5) einen Lufteinlass (51) a, einen Luftauslass (54), ein Gebläse und eine zusammengesetzte Filterscheibe (52) umfasst;
wobei der Lufteinlass (51) a an der Seitenwand der Hülle angebracht ist, wobei der Lufteinlass (54) an der oberen Wand der Hülle in der Form einer Leiterstruktur angebracht ist, wobei die zusammengesetzte Filterscheibe (52) hinten an dem Lufteinlass (51) a angebracht und mit dem Luftkanal (1) verbunden ist, wobei das Gebläse hinten an der zusammengesetzten Filterscheibe (52) angebracht ist, wobei die Befeuchtungsvorrichtung (6) einen Befeuchtungsteil und einen Nebelauslass (61) umfasst, wobei der Nebelauslass (61) durch die obere Wand der Hülle verläuft und mit der Luft außerhalb der Hülle verbunden ist.

## Revendications

1. Ensemble de conditionnement d'air comprenant une coque, un dispositif de refroidissement (2), une conduite d'eau (3), un dispositif de chauffage (4), un dispositif de commande, un dispositif de détection, un dispositif de protection de sécurité, un dispositif de purification d'air (5) et un dispositif d'humidification (6) ; Ladite coque comprend une coque interne et une coque externe, un conduit d'air (1) est formé entre ladite coque externe et ladite coque interne ; Ledit dispositif de refroidissement (2) est fixé sur la paroi intérieure de la coque interne, ledit dispositif de chauffage (4) est fixé sur la paroi inférieure de la coque interne et ledit dispositif de chauffage (4) est connecté au dispositif de refroidissement (2) par la conduite d'eau (3) ; Ledit dispositif de commande comprend un régulateur (71) et un dispositif d'affichage (72), ledit régulateur (71) est placé sur le dessus du dispositif de chauffage (4) et fixé sur la paroi intérieure de la coque interne opposée au dispositif de refroidissement (2), ledit dispositif d'affichage (72) est placé sur la paroi supérieure de la coque externe ; Ledit dispositif de détection comprend un capteur de température, un capteur d'humidité et un capteur PM qui sont tous placés sur la paroi extérieure de la coque externe et connectés au dispositif de commande, et comprend en outre un capteur de surveillance (91) placé sur la paroi intérieure de la coque interne ; Ledit dispositif de protection de sécurité comprend un dispositif de protection contre la foudre (93) placé sur le fond de la coque interne, un dispositif anti-basculement (92) placé sur la paroi intérieure de la coque interne du même côté que le régulateur (71), une unité de commutation du niveau d'eau (41) placée dans le dispositif de chauffage (4) et un dispositif anti-glissement (94) placé sur le fond de la coque interne ; Ledit dispositif de purification d'air (5) est placé sur le dessus du régulateur (71) ; Ledit dispositif d'humidification (6) est placé dans le dispositif de purification d'air (5) et fixé sur la paroi supérieure de la coque interne ; Ledit dispositif de chauffage (4), ledit dispositif de purification d'air (5) et ledit dispositif d'humidification (6) sont connectés électriquement au dispositif de commande.

2. Ensemble de conditionnement d'air selon la revendication 1, **caractérisé en ce que** ledit dispositif de refroidissement (2) comprend un tube à ailettes de rayonnement en cuivre et un ventilateur de refroidissement, ledit ventilateur de refroidissement étant assemblé à l'endroit qui se trouve d'un côté du tube à ailettes de rayonnement en cuivre et à proximité de la conduite d'eau (3).

3. Ensemble de conditionnement d'air selon la revendication 1, **caractérisé en ce que** ledit dispositif de chauffage (4) comprend un réservoir d'eau, un mécanisme de circulation d'eau et un mécanisme de chauffage, ledit mécanisme de circulation d'eau et ledit mécanisme de chauffage étant placés dans le réservoir d'eau, ledit réservoir d'eau est le réservoir d'eau intégré eau-huile, ledit mécanisme de circulation d'eau est défini comme la pompe de circulation résistante aux températures élevées.

4. Ensemble de conditionnement d'air selon la revendication 1, **caractérisé en ce qu'**une entrée d'air (51) a et une entrée d'air (51) b sont prévues sur la paroi extérieure de ladite coque de haut en bas.

5. Ensemble de conditionnement d'air selon l'une quelconque des revendications 1 à 4, **caractérisé en ce que** ledit dispositif de purification d'air (5) comprend une entrée d'air (51) a, une sortie d'air (54), un ventilateur et un filtre écran composite. (52) ; ladite entrée d'air (51) a est placée sur la paroi latérale de la coque, ladite sortie d'air (54) est placée sur la paroi supérieure de la coque sous la forme d'une structure en échelle, ledit tamis filtrant composite (52) est placé à l'arrière de ladite entrée d'air (51) a et connecté au conduit d'air (1), ledit ventilateur est placé à l'arrière dudit tamis filtrant composite (52), ledit dispositif d'humidification (6) comprend une partie d'humidification et une sortie de brouillard (61), ladite sortie de brouillard (61) traverse la paroi supérieure de la coque et est reliée à l'air à l'extérieur de la coque.
